# EUROPÄISCHE PATENTSCHRIFT

(11) **EP 2 651 844 B1**
(45) Veröffentlichungstag und Bekanntmachung des Hinweises auf die Patenterteilung: **19.08.2015**
(21) Anmeldenummer: 11808718.8
(22) Anmeldetag: 13.12.2011
(51) Int. Cl.: C03C 23/00, C03C 17/36, B23K 26/40, B23K 26/00, B44C 1/22, B23K 26/36, F24C 15/10, B23K 26/06

(54) **VERFAHREN ZUM AUSBILDEN EINER KOCHFELDPLATTE FÜR EIN KOCHFELD**
PROCESS FOR PRODUCING A HOTPLATE FOR A HOB
PROCÉDÉ POUR FORMER UNE PLAQUE DE CUISSON POUR UN PLAN DE CUISSON

(30) Priorität: 16.12.2010 ES 201031856
(43) Veröffentlichungstag der Anmeldung: 23.10.2013
(73) Patentinhaber: BSH Hausgeräte GmbH, 81739 München (DE)
(72) Erfinder: ALAMAN AGUILAR, Jorge, E-50008 Zaragoza (ES); BUÑUEL MAGDALENA, Miguel Angel, E-50017 Zaragoza (ES); ESTER SOLA, Francisco Javier, E-50001 Zaragoza (ES); GARCIA JIMENEZ, Jose-Ramon, E-50009 Zaragoza (ES); GARCIA MARTINEZ, Jose Andres, E-50014 Zaragoza (ES); PEREZ CABEZA, Pilar, E-50008 Zaragoza (ES); PLANAS LAYUNTA, Fernando, E-50009 Zaragoza (ES)
(86) Internationale Anmeldenummer: PCT/IB2011/055634
(87) Internationale Veröffentlichungsnummer: WO 2012/080945

(56) Entgegenhaltungen:
- WO-A1-00/61364
- WO-A1-2011/020719
- US-A1- 2004 238 506
- US-A1- 2007 264 421
- US-A1- 2008 190 409
- KURT WEINGARTEN: "High average power, high pulse energy, picoseconds lasers for material processing", ENVIRONMEMNT PROFESSIONAL MICROTECHNOLOGIES EPMT CONFERENCE, 5. Juni 2008 (2008-06-05), Seiten 1-28, XP008148342,

## Beschreibung

Die Erfindung betrifft ein Verfahren zum Ausbilden einer Kochfeldplatte für ein Kochfeld, bei welcher an einer Unterseite der Kochfeldplatte zumindest eine metallische Schicht und eine auf die metallische Schicht folgende weitere Schicht ausgebildet wird.

Bei Kochfeldern, die als Kochfeldplatten Glasplatten oder Platten aus Glaskeramik haben, wird an der Unterseite eine metallische Schicht oder ein Schichtenverbund aus mehreren metallischen Schichten aufgebracht. Bekannt ist hierbei das Aufbringen mittels Sputtertechnologie. Darüber hinaus kann vorgesehen sein, dass dann unter diese zumindest eine metallische Schicht bei einer Betrachtung von oben auf die Kochfeldplatte zumindest eine weitere Schicht aus einem zur metallischen Schicht unterschiedlichen Material aufgebracht wird. Dies kann beilspielsweise eine Schicht aus einem dielektrischen Material sein. Bekannt ist auch, dass Farbschichten unter zumindest einer metallischen Schicht aufgebracht sind. Im Hinblick auf den Schichtenverbund mit mehreren metallischen Schichten kann dort eine alternierende Reihenfolge einer metallischen Schicht mit einer dielektrischen Schicht und wiederum folgend mit einer metallischen Schicht und dann wiederum einer dielektrischen Schicht usw. ausgebildet sein.

Darüber hinaus ist es bekannt, dass derartige Schichten unter der Kochfeldplatte bereichsweise entfernt sind, wobei dies beispielsweise durch Ätzen erfolgen kann. Diesbezüglich kann auch vorgesehen sein, dass bereits beim Aufbringen der Schichten entsprechende Aussparungen, beispielsweise durch eine Maske, erzeugt werden.

Bei den herkömmlichen Vorgehensweisen zur Aufbringung der Schichten erfolgt dies häufig sehr ungenau, insbesondere wenn sehr dünne Linien als Aussparungen einer Schicht ausgebildet werden sollen. Darüber hinaus wird häufig auch eine weitere andere Schicht ungewollt entfernt bzw. die als bei der Erzeugung vorgesehene Aussparung kann nur sehr ungenau erfolgen.

Es ist Aufgabe der vorliegenden Erfindung, ein Verfahren zum Ausbilden einer Kochfeldplatte für ein Kochfeld zu schaffen, bei dem das Aufbringen von Schichten und Erzeugen von Unterbrechungen von Schichten präziser und aufwandsärmer erfolgen kann.

Die US 2004/0238506 A1 offenbart ein Verfahren zum Dekorieren eines Trägers mit einer transparenten äußeren Schicht.

Die US 2008/0190409 A1 offenbart eine Glaskeramikplatte und ein Verfahren zu deren Herstellung.

Diese Aufgabe wird durch ein Verfahren, welches die Merkmale nach Anspruch 1 aufweist, gelöst.

Ein erfindungsgemäßes Verfahren zum Ausbilden einer Kochfeldplatte für ein Kochfeld sieht vor, dass an einer Unterseite der Kochfeldplatte zumindest eine metallische Schicht und eine auf die metallische Schicht folgende weitere Schicht ausgebildet wird. Insbesondere ist die weitere Schicht aus einem zur metallischen Schicht unterschiedlichen Material, insbesondere einem elektrisch nicht leitenden Material ausgebildet. Nach dem Aufbringen der zumindest zwei Schichten wird die metallische Schicht bereichsweise durch Laserlicht entfernt, so dass bei Betrachtung des Kochfelds auf der Oberseite die unter der metallischen Schicht ausgebildete weitere Schicht erkannt wird bzw. erscheint. Bei dieser Verfahrensabfolge wird somit in besonderer Spezifikation zunächst der gesamte Schichtenaufbau unter der Kochfeldplatte ausgebildet und erst dann wird die metallische Schicht bereichsweise abgetragen. Dies erfolgt ganz spezifisch durch ein Laserlicht. Durch eine derartige Vorgehensweise kann die Präzision des Abtragens und Entfernens der metallischen Schicht verbessert werden. Darüber hinaus kann die Beeinträchtigung der darunter ausgebildeten weiteren Schicht minimiert werden.

Es ist vorgesehen, dass das Laserlicht zum Entfernen der metallischen Schicht auf die Oberseite der Kochfeldplatte auftreffend eingestrahlt wird und durch die Kochfeldplatte hindurch gestrahlt wird, um die insbesondere direkt darunter angebrachte metallische Schicht bereichsweise entfernen zu können. Diese ortspezifische Einstrahlung des Laserlichts gewährleistet eine besondere Vorteilhaftigkeit im Hinblick auf die Präzision der Abtragung von sehr dünnen Linien einerseits und dem möglichst geringen Beeinträchtigen der weiteren Schicht andererseits.

Es ist vorgesehen, dass der Laserstrahl des Laserlichts auf die Oberseite der Kochfeldplatte fokussiert wird.

In diesem Zusammenhang besonders vorteilhaft, wenn die metallische Schicht in Linien entfernt wird, welche eine Linienbreite < 500 µm, aufweisen, insbesondere 400 µm, aufweisen. Die Wellenlänge des Laserlichts beträgt 532 nm.

Vorzugsweise wird als weitere Schicht eine Farbschicht, insbesondere eine dielektrische Farbschicht ausgebildet. Unter einer Farbschicht wird eine derartige verstanden, die zum metallischen optischen Eindruck eine unterschiedliche Farbe aufweist.

Vorzugsweise ist vorgesehen, dass das Abtragen der metallischen Schicht erst nach dem vollständigen Ausbilden aller Schichten an der Unterseite der Kochfeldplatte durchgeführt wird. Dies ist besonders vorteilhaft, da zunächst beim Aufbringen der Schichten nicht auf entsprechende Aussparungen geachtet werden muss, sondern die Schichten quasi vollflächig mit gewünschter Dicke sehr präzise aufgebracht werden können.

Da übliche Dicken bei derartigen Kochfeldplatten bei etwa 4 mm liegen und im Hinblick auf das Glaskeramikmaterial diese Materialzusammensetzung bekannt ist, kann durch diese Fokussierung dann an der Stelle der metallischen Schicht eine besonders vorteilhafte Abtragwirkung mit dem Laserlicht erzielt werden.

Vorzugsweise wird vorgesehen, dass die metallische Schicht mit einer Dicke kleiner 130 nm, insbesondere zwischen 20 nm und 100 nm ausgebildet wird.

Vorzugsweise wird vorgesehen, dass die weitere Schicht mit einer Dicke kleiner 250 µm, insbesondere zwischen 100 µm und 200 µm, ausgebildet wird.

Besonders vorteilhaft ist es, dass der Laserstrahl des Laserlichts mit einer Geschwindigkeit von 2000 mm/s bewegt wird. Gerade bei den entsprechenden Schichtdicken, bei der entsprechenden Ausgestaltung der Kochfeldplatte und bei einem Laserlicht im grünen Wellenlängenbereich wird die oben angesprochene präzise Abtragung der metallischen Schicht ohne Beeinträchtigung in einer darunter ausgebildeten weiteren Schicht erreicht.

Vorzugsweise ist in diesem Zusammenhang der Laserstrahl des Laserlichts mit einer Pulsfrequenz von 110 kHz erzeugt. Die dabei erforderliche besondere Präzision der Erzeugung derartig dünner und schmaler Linien zugleich mit einer vollständigen durchgängigen Abtragung der metallischen Schicht derart, dass die darunter angeordnete weitere Schicht nach oben freiliegt und nicht mehr durch metallisches Material bedeckt ist, kann mit den spezifischen Vorgehensweisen, so wie sie oben erläutert wurden, erzielt werden.

Ein Ausführungsbeispiel der Erfindung wird nachfolgend anhand schematischer Zeichnungen näher erläutert. Es zeigen:
- Fig. 1: eine perspektivische Darstellung eines Ausführungsbeispiels einer erfindungsgemäß hergestellten Kochfeldplatte;
- Fig. 2: eine Schnittdarstellung entlang der Schnittlinie II-II einer Kochfeldplatte mit darunter ausgebildeten Schichten vor einer Bearbeitung mit Laserlicht; und
- Fig. 3: die Schnittdarstellung gemäß Fig. 2 mit vorgesehener Laserlichtbearbeitung.

In den Figuren werden gleiche oder funktionsgleiche Elemente mit den gleichen Bezugszeichen versehen.

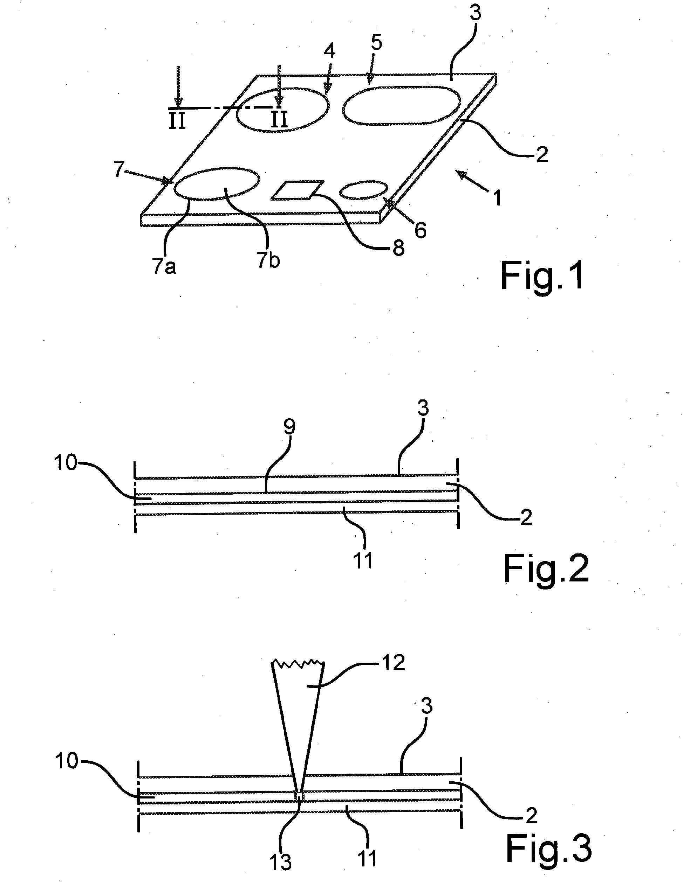

In Fig. 1 ist in einer perspektivischen Darstellung ein Kochfeld 1 gezeigt, welches eine Kochfeldplatte 2 aufweist, die aus Glas oder Glaskeramik ausgebildet ist. Auf einer Oberseite 3 der Kochfeldplatte 2 sind im Ausführungsbeispiel vier Kochzonen 4, 5, 6 und 7 ausgebildet, auf denen Zubereitungsgefäße zum Zubereiten von Gargut positionierbar sind.

Insbesondere ist das Kochfeld 1 ein Induktionskochfeld. Diesbezüglich sind unter der Kochfeldplatte 2 jeweils unter den Flächen der Kochzonen 4 bis 7 Induktoren angeordnet.

Beispielhaft umfasst das Kochfeld 1 auch eine Bedienvorrichtung 8, die zumindest mit Teilkomponenten in der Kochfeldplatte 2 angeordnet bzw. von der Oberseite 3 her bedienbar ist.

In Fig. 2 ist eine Schnittdarstellung der Kochfeldplatte 2 entlang der Schnittlinie II-II dargestellt, wenn diese noch nicht fertig hergestellt ist. An einer Unterseite 9 der Kochfeldplatte 2 ist eine metallische Schicht 10 ausgebildet. Unter dieser metallischen Schicht 10 ist eine Farbschicht 11 aufgebracht. Es kann auch vorgesehen sein, dass weitere Schichten vorhanden sind. Bezüglich der Ausbildung der Kochfeldplatte 2 ist vorgesehen, dass zunächst die Kochfeldplatte 2 bereitgestellt wird. Dann wird auf der Unterseite die metallische Schicht 10 und unter dieser folgend die Farbschicht 11 aufgebracht. Dies kann beispielsweise durch Sputtern erfolgen. Im Ausführungsbeispiel weist die Kochfeldplatte 2 eine Dicke von etwa 4 mm auf. Die direkt an der Unterseite 9 aufgebrachte metallische Schicht weist vorzugsweise eine Dicke zwischen 20 nm und 100 nm auf. Die Schichtdicke der Farbschicht 11 beträgt vorzugsweise zwischen 100 µm und 200 µm.

Nachdem der vollständige Schichtenaufbau auf der Unterseite 9 im Wesentlichen vollflächig aufgebracht ist, wird im Nachfolgenden mit einem Laser ein Laserstrahl 12 erzeugt. Dieser wird auf die Oberseite 3 bzw. von der Oberseite 3 her kommend auf die Kochfeldplatte 2 eingestrahlt. Insbesondere erfolgt die Einstrahlung des Laserlichts gemäß dem Laserstrahl 12 derart, dass der Laserstrahl 12 auf der Oberseite 3 fokussiert ist. Das Laserlicht wird mit einer Wellenlänge von 532 nm erzeugt. Darüber hinaus wird der Laserstrahl 12 mit einer Geschwindigkeit von 2000 mm/s relativ zur Kochfeldplatte 2 bewegt, um entsprechende Linien, die insbesondere eine Breite von 400 µm aufweisen, zu erzeugen. Beispielsweise werden damit die Konturen bzw. Flächenbegrenzungen der Kochzonen 4 bis 7 kenntlich gemacht. In diesem Sinne wird die metallische Schicht 9 linienförmig abgetragen, so dass bei einer Betrachtung der Kochfeldplatte 2 von der Oberseite 3 her die Farbschicht 11 erkannt werden kann und nach oben freiliegt bzw. durch die Schicht 10 ortspezifisch nicht mehr bedeckt ist. Insbesondere ist somit vorgesehen, dass beispielsweise eine Flächenbegrenzung 7a (Fig. 1) der Kochzone 7 im Hinblick auf den Farbton gemäß der Farbschicht 11 erkannt wird und eine durch die Kontur 7a umschlossene Kreisfläche 7b gemäß der metallischen Schicht 10 durch die Kochfeldplatte 2 hindurch erkannt wird. Entsprechende Konturbildungen im Hinblick auf die farblichen Unterschiede ist bei den Kochzonen 4 bis 6 vorgesehen.

Wie des Weiteren in der Darstellung in Fig. 3 zu erkennen ist, wird bei dem Hindurchtreten des Laserstrahls 12 durch die Kochfeldplatte 2 die metallische Schicht 10 in einem sehr begrenzten und präzise festzulegenden Bereich vollständig abgetragen, und zwar bis zur Farbschicht 11, die durch den Laserstrahl 12 nicht abgetragen wird bzw. in einem vernachlässigbaren Maße durch den Laserstrahl 12 beeinträchtigt wird.

Der Laserstrahl wird mit einer Pulsfrequenz von 110 kHz erzeugt.

Es kann auch vorgesehen sein, dass der Laserstrahl 12 so erzeugt wird, dass die metallische Schicht 10 an der entsprechenden Stelle 13 nicht durchgängig abgetragen wird, sondern im Hinblick auf die Materialeigenschaften so verändert wird, jedoch beibehalten wird, dass ebenfalls die darunter angeordnete Farbschicht 11 hindurch scheint und bei einer Betrachtung der Kochfeldplatte 2 von der Oberseite 3 her diese Farbschicht 11 in einem Linienbereich 13 erkannt wird.

### Bezugszeichenliste

- 1: Kochfeld
- 2: Kochfeldplatte
- 3: Oberseite
- 4, 5, 6, 7: Kochzone
- 7a: Flächenbegrenzung
- 7b: Kreisfläche
- 8: Bedienvorrichtung
- 9: Unterseite
- 10: metallische Schicht
- 11: Farbschicht
- 12: Laserstrahl

## Patentansprüche

1. Verfahren zum Ausbilden einer aus Glaskeramik gebildeten Kochfeldplatte (2) für ein Kochfeld (1), bei welchem an einer Unterseite (9) der Kochfeldplatte (2) zumindest eine metallische Schicht (10) und eine unter der metallischen Schicht (10) folgende weitere Schicht (11) ausgebildet wird, wobei nach dem Aufbringen der zumindest zwei Schichten (10, 11) die metallische Schicht (10) bereichsweise durch Laserlicht eines Laserstrahls (12) verändert wird, so dass bei Betrachtung des Kochfelds (1) auf der Oberseite (3) die unter der metallischen Schicht (10) ausgebildete weitere Schicht (11) erkannt wird, **dadurch gekennzeichnet, dass** das Laserlicht zum Entfernen der metallischen Schicht (10) auf die Oberseite (3) der Kochfeldplatte (2) auftreffend eingestrahlt wird und durch die Kochfeldplatte (2) hindurch gestrahlt wird, wobei das Laserlicht auf die Oberseite (3) fokussiert wird, wobei die metallische Schicht (10) in Linien entfernt wird, welche eine Linienbreite kleiner 500 µm, aufweisen, insbesondere 400 µm, aufweisen und wobei das Laserlicht mit einer Wellenlänge von 532 nm erzeugt wird.

2. Verfahren nach Anspruch 1, **dadurch gekennzeichnet, dass** als weitere Schicht eine Farbschicht (11) ausgebildet wird.

3. Verfahren nach Anspruch 1 oder 2, **dadurch gekennzeichnet, dass** das Abtragen der metallischen Schicht (10) erst nach dem vollständigen Ausbilden aller Schichten (10, 11) an der Unterseite (9) der Kochfeldplatte (2) durchgeführt wird.

4. Verfahren nach einem der vorhergehenden Ansprüche, **dadurch gekennzeichnet, dass** die metallische Schicht (10) mit einer Dicke kleiner 130nm, insbesondere zwischen 20 nm und 100 nm ausgebildet wird.

5. Verfahren nach einem der vorhergehenden Ansprüche, **dadurch gekennzeichnet, dass** die weitere Schicht mit einer Dicke kleiner 250 µm, insbesondere zwischen 100 µm und 200 µm, ausgebildet wird.

6. Verfahren nach einem der vorhergehenden Ansprüche, **dadurch gekennzeichnet, dass** das Laserlicht mit einer Geschwindigkeit von 2000 mm/s bewegt wird.

7. Verfahren nach einem der vorhergehenden Ansprüche, **dadurch gekennzeichnet, dass** das Laserlicht mit einer Pulsfrequenz von 110kHz erzeugt wird.

## Claims

1. Method for forming a hob plate (2) formed from ceramic glass for a hob (1), in which on an underside (9) of the hob plate (2) at least one metallic layer (10) and a further layer following (11) underneath the metallic layer (10) is formed, wherein after the application of the at least two layers (10, 11) the metallic layer (10) is altered in regions by laser light of a laser beam (12), so that when looking at the upper side (3) of the hob (1) the further layer (11) formed underneath the metallic layer (10) is detected, **characterised in that** to remove the metallic layer (10) the laser light is irradiated so as to strike the upper side (3) of the hob plate (2) and is radiated through the hob plate (2), wherein the laser light is focused onto the upper side (3), wherein the metallic layer (10) is removed in lines which have a line width of less than 500 µm, in particular 400 µm, and wherein the laser light is generated with a wavelength of 532 nm.

2. Method according to claim 1, **characterised in that** a paint layer (11) is formed as the further layer.

3. Method according to claim 1 or 2, **characterised in that** the removal of the metallic layer (10) is not performed until after all layers (10, 11) have been completely formed on the underside (9) of the hob plate (2).

4. Method according to one of the preceding claims, **characterised in that** the metallic layer (10) is formed with a thickness of less than 130 nm, in particular between 20 nm and 100 nm.

5. Method according to one of the preceding claims, **characterised in that** the further layer is formed with a thickness of less than 250 µm, in particular between 100 µm and 200 µm.

6. Method according to one of the preceding claims, **characterised in that** the laser light is moved at a speed of 2000 mm/s.

7. Method according to one of the preceding claims, **characterised in that** the laser light is generated with a pulse frequency of 110 kHz.

## Revendications

1. Procédé permettant de réaliser une plaque de cuisson (2) formée en vitrocéramique pour une table de cuisson (1), dans lequel au moins une couche métallique (10) et une autre couche (11) suivante en dessous de la couche métallique (10) sont réalisées sur un côté inférieur (9) de la plaque de cuisson (2), la couche métallique (10), après l'application des au moins deux couches (10, 11), étant modifiée par sections par lumière laser d'un rayon laser (12) de sorte qu'en observant la table de cuisson (1) sur le côté supérieur (3), l'autre couche (11) réalisée en dessous de la couche métallique (10) est reconnaissable, **caractérisé en ce que** la lumière laser, pour enlever la couche métallique (10), est rayonnée de manière incidente sur le côté supérieur (3) de la plaque de cuisson (2) et est irradiée en traversant la plaque de cuisson (2), la lumière laser étant concentrée sur le côté supérieur (3), la couche métallique (10) étant retirée en lignes qui présentent une largeur de ligne plus petite que 500 µm, notamment 400 µm, et la lumière laser étant générée avec une longueur d'onde de 532 nm.

2. Procédé selon la revendication 1, **caractérisé en ce qu'**une couche de couleur (11) est réalisée comme autre couche.

3. Procédé selon la revendication 1 ou 2, **caractérisé en ce que** l'enlèvement de la couche métallique (10) est réalisé seulement après la réalisation complète de toutes les couches (10, 11) sur le côté inférieur (9) de la plaque de cuisson (2).

4. Procédé selon l'une quelconque des revendications précédentes, **caractérisé en ce que** la couche métallique (10) est réalisée avec une épaisseur plus petite que 130 nm, notamment comprise entre 20 nm et 100 nm.

5. Procédé selon l'une quelconque des revendications précédentes, **caractérisé en ce que** l'autre couche est réalisée avec une épaisseur plus petite que 250 µm, notamment comprise entre 100 µm et 200 µm.

6. Procédé selon l'une quelconque des revendications précédentes, **caractérisé en ce que** la lumière laser est déplacée avec une vitesse de 2000 mm/s.

7. Procédé selon l'une quelconque des revendications précédentes, **caractérisé en ce que** la lumière laser est générée avec une fréquence d'impulsion de 110 kHz.
